# EUROPÄISCHE PATENTSCHRIFT

(11) **EP 1 338 050 B1**
(45) Veröffentlichungstag und Bekanntmachung des Hinweises auf die Patenterteilung: **22.12.2010**
(21) Anmeldenummer: 01974040.6
(22) Anmeldetag: 14.09.2001
(51) Int. Cl.: H01M 8/24

(54) **BRENNSTOFFZELLENMODUL**
FUEL CELL MODULE
MODULE A PILES A COMBUSTIBLE

(30) Priorität: 26.09.2000 DE 10047591
(43) Veröffentlichungstag der Anmeldung: 27.08.2003
(73) Patentinhaber: SIEMENS AKTIENGESELLSCHAFT, 80333 München (DE)
(72) Erfinder: MATTEJAT, Arno, 91088 Bubenreuth (DE); MEHLTRETTER, Igor, 91054 Buckenhof (DE); ROTHFISCHER, Johann, 91058 Erlangen (DE)
(86) Internationale Anmeldenummer: PCT/DE2001/003542
(87) Internationale Veröffentlichungsnummer: WO 2002/027836

(56) Entgegenhaltungen:
- EP-A- 0 771 038
- JP-A- 61 128 474
- US-A- 4 642 274
- PATENT ABSTRACTS OF JAPAN vol. 2000, no. 22, 9. März 2001 (2001-03-09) & JP 2001 126749 A (MATSUSHITA ELECTRIC IND CO LTD), 11. Mai 2001 (2001-05-11)
- PATENT ABSTRACTS OF JAPAN vol. 012, no. 337 (E-657), 12. September 1988 (1988-09-12) & JP 63 098968 A (SANYO ELECTRIC CO LTD), 30. April 1988 (1988-04-30)
- PATENT ABSTRACTS OF JAPAN vol. 2000, no. 22, 9. März 2001 (2001-03-09) & JP 2001 126750 A (MATSUSHITA ELECTRIC IND CO LTD), 11. Mai 2001 (2001-05-11)

## Beschreibung

Die Erfindung bezieht sich auf ein Brennstoffzellenmodul, bei dem eine Anzahl von hintereinandergeschalteten Brennstoffzellen einen Brennstoffzellenstapel bilden.

Brennstoffzellen können zur umweltfreundlichen Erzeugung von Elektrizität dienen. In einer Brennstoffzelle läuft nämlich ein Prozeß ab, der im wesentlichen eine Umkehrung der Elektrolyse darstellt. In einer Brennstoffzelle wird dafür ein Wasserstoff aufweisender Brennstoff einer Anode und ein Sauerstoff aufweisender Hilfsstoff einer Kathode zugeleitet. Anode und Kathode sind dabei elektrisch über eine Elektrolytschicht voneinander getrennt, wobei die Elektrolytschicht zwar einen Ionenaustausch zwischen dem Brennstoff und dem Sauerstoff zuläßt, ansonsten aber eine gasdichte Trennung von Brennstoff und Hilfsstoff sicherstellt. Infolge des Ionenaustauschs kann im Brennstoff enthaltener Wasserstoff mit dem Sauerstoff zu Wasser reagieren, wobei sich an der brennstoffseitigen Elektrode oder Anode Elektronen anreichern und an der hilfsstoffseitigen Elektrode oder Kathode Elektronen aufgenommen werden. Somit baut sich beim Betrieb der Brennstoffzelle eine Potentialdifferenz oder Spannung zwischen Anode und Kathode auf. Die Elektrolytschicht, die bei einer Hochtemperatur-Brennstoffzelle als keramischer Festelektrolyt oder bei einer Niedertemperatur-Brennstoffzelle als Polymer-Membran ausgebildet sein kann, hat somit die Funktion, die Reaktanten voneinander zu trennen, die Ladung in Form von Ionen zu überführen und einen Elektronenkurzschluß zu verhindern.

Aufgrund der elektrochemischen Potentiale der üblicherweise eingesetzten Stoffe kann in einer derartigen Brennstoffzelle unter normalen Betriebsbedingungen eine Elektrodenspannung von etwa 0,6 bis 1,0 V aufgebaut und während des Betriebs aufrechterhalten werden. Für technische Anwendungen, in denen abhängig vom Einsatzzweck oder der geplanten Belastung eine wesentlich höhere Gesamtspannung gefordert sein kann, sind daher üblicherweise eine Mehrzahl von Brennstoffzellen in der Art eines Brennstoffzellenstapels derart elektrisch in Reihe geschaltet, daß die Summe der von den Brennstoffzellen jeweils gelieferten Elektrodenspannungen der geforderten Gesamtspannung entspricht oder diese übersteigt.

Jeder der zu einem derartigen Brennstoffzellenstapel zusammengefaßten Brennstoffzellen ist dabei im Bereich ihrer Elektroden ein Volumenbereich zugeordnet, dem die jeweils erforderlichen Medien wie beispielsweise der Brennstoff oder der Hilfsstoff zuführbar sind. Dieser Volumenbereich kann beispielsweise durch der eigentlichen Brennstoffzelle zuzurechnende Grenzflächen begrenzt sein, wobei die Grenzflächen zweier benachbarter Brennstoffzellen zur Bildung eines abgeschlossenen Volumenbereichs über eine zwischen ihnen angeordnete Dichtung der Außenwelt gegenüber abgedichtet sind. Je nach geforderter Gesamtspannung kann die Anzahl der Brennstoffzellen in einem derartigen Brennstoffzellenstapel beispielsweise 50 oder mehr betragen.

Zur Herstellung der erforderlichen Dichtigkeit zwischen benachbarten Brennstoffzellen im Hinblick auf die Zu- und Abfuhr der Medien wie Brennstoff und Hilfsstoff kann es notwendig sein, den Brennstoffzellenstapel in seiner Längsrichtung einer gewissen Verspannung oder Vorspannung zu unterwerfen. Dies entspricht einer andauernden Belastung des Brennstoffzellenstapels in seiner Längsrichtung auf Druck. Dadurch ist sichergestellt, daß einerseits jede Brennstoffzelle mit den ihr benachbarten Brennstoffzellen in mechanischem Kontakt bleibt, wobei andererseits, insbesondere bei der Verwendung von Dichtungen aus elastischem Material zwischen den Brennstoffzellen, infolge des in Längsrichtung aufgebrachten Anpressdrucks die erforderliche Dichtwirkung auch tatsächlich vorliegt.

Eine derartige Belastung auf Druck kann jedoch bei langgestreckten Gebilden wie Stäben, Türmen oder Verstrebungen gemäß den Knickbedingungen nach Euler oder Tetmajer zu einer Tendenz zum Ausknicken führen. Unter Ausknicken ist hierbei insbesondere ein Ausweichen eines mittleren Bereiches des langgestreckten Gebildes in eine Richtung senkrecht zur Längsachse zu verstehen. Diese Tendenz zum Ausknicken ist wesentlich von der Länge des jeweiligen Gebildes abhängig. Ein derartiges, bei einem Brennstoffzellenstapel auftretendes Ausknicken würde jedoch infolge einer Verschiebung einiger der Brennstoffzellen aus ihrer Sollage die Betriebsfähigkeit des Brennstoffzellenstapels gravierend beeinträchtigen oder vollständig unterbinden. Je nach dem für die Verbindung von benachbarten Brennstoffzellen vorgesehenen Dichtungssystem und daraus resultierender geforderter Spannkraft in Längsrichtung des Brennstoffzellenstapels ist die Anzahl der miteinander zu einem Brennstoffzellenstapel verschaltbaren Brennstoffzellen somit nur begrenzt.

Andererseits kann jedoch gerade bei der Auslegung eines Brennstoffzellensystems für Anwendungen mit vergleichsweise hohen Auslegungsspannungen die Zusammenschaltung einer vergleichsweise hohen Zahl von Brennstoffzellen, beispielsweise 70 oder mehr, vorgesehen sein. Die Möglichkeit, beliebig viele Brennstoffzellen zu einem Brennstoffzellenstapel zusammenzufassen, stellt somit einen wichtigen Beitrag für die Flexibilität bei der Auslegung eines Brennstoffzellenmoduls dar. Dabei kann es insbesondere aus Flexibilitätsgründen wünschenswert sein, die Brennstoffzellen zu einem Brennstoffzellenstapel in einem leicht transportierbaren Brennstoffzellenmodul zusammenzufassen.

Die US-A-4 642 274 offenbart einen in seiner Längsrichtung zusammengepressten Brennstoffzellenstapel, der in der Längsrichtung an seinen Außenseiten Dichtungsrahmen für die gasdichte Befestigung von Gasverteilern an dem Brennstoffzellenstapel aufweist. Die Dichtungsrahmen sind dabei straff miteinander verbunden, so dass sie abdichtend an dem Brennstoffzellenstapel anliegen und einen den Brennstoffzellenstapel umfassenden Mantel bilden.

Die JP 61 128474 A offenbart ein Brennstoffzellenmodul gemäß Oberbegriff des Patentanspruchs 1 und des Patentanspruchs 2. Zur Erhöhung der Festigkeit und der Dichtigkeit sind dabei auf der Ober- und Unterseite eines Brennstoffzellenstapels oktogonale Kompressionsplatten angeordnet, an deren vier Ecken Winkelelemente angebracht sind, die in Längsrichtung des Stapels verlaufen, und an denen Gasverteiler befestigt sind.

Der Erfindung liegt daher die Aufgabe zugrunde, ein Brennstoffzellenmodul der oben genannten Art anzugeben, bei dem auch bei der Zusammenfassung einer vergleichsweise großen Anzahl von Brennstoffzellen zu einem Brennstoffzellenstapel die Gefahr eines Ausknickens des Brennstoffzellenstapels sicher vermieden ist.

Diese Aufgabe wird erfindungsgemäß gelöst, indem der Brennstoffzellenstapel zumindest in einem mittleren Bereich in seiner Längsrichtung gesehen von einem Stabilisierungsmantel umfaßt ist.

Vorteilhafte Ausgestaltungen der Erfindung sind Gegenstand der Unteransprüche.

Die Erfindung geht dabei von der Überlegung aus, daß die unerwünschte Neigung des Brennstoffzellenstapels zum Ausknicken zwar einerseits von der Anzahl der den Brennstoffzellenstapel bildenden Brennstoffzellen abhängt. Andererseits ist die Neigung zum Ausknicken aber auch abhängig von der Charakteristik des mechanischen Kontakts zweier benachbarter Brennstoffzellen. Für eine ausreichende Flexibilität bei der Auslegung eines Brennstoffzellenmoduls sollte die mechanische Stabilität des Brennstoffzellenstapels jedoch unabhängig von diesen beiden Parametern gegeben sein. Dazu ist eine externe Stabilisierung des Brennstoffzellenstapels vorgesehen.

Für eine besonders einfache und somit günstige Montierbarkeit weist der Stabilisierungsmantel dabei eine Anzahl von formschlüssig an die Außenkontur des Brennstoffzellenstapels angepaßten Formelementen auf.

Erfindungsgemäß sind einige oder alle der Formelemente als an einer Außenkante des Brennstoffzellenstapels anlegbare Winkelstange ausgebildet. In alternativer Ausgestaltung sind einige oder alle der Formelemente als in Längsrichtung des Brennstoffzellenstapels ausgedehntes, diesen im Querschnitt an einer seiner Außenseiten umgreifendes U-Blech ausgebildet. Beiden Ausgestaltungen der Formelemente ist gemeinsam, daß sie im Querschnitt zumindest einen vorzugsweise rechtwinklig ausgebildeten Winkelbereich aufweisen. Dieser gewährleistet einerseits eine grundsätzliche Festigkeit oder Steifigkeit des Formelements gegen Verwindung oder Torsion und andererseits eine gewisse Stabilität gegenüber lateraler Beanspruchung oder Abknicken. Ein Beitrag zur Stabilisierung des Brennstoffzellenstapels gegen Ausknicken ist somit nicht nur durch das Zusammenwirken einer Mehrzahl der Formelemente bei der Bildung des Stabilisierungsmantels, sondern auch bereits durch ein einzelnes Formelement für sich gegeben.

Zur Bildung des Stabilisierungsmantels ist jedes Formelement mit den ihm benachbarten Formelementen über eine Anzahl von Verbindungselementen verbunden. Somit können in besonders materialsparender Bauweise die Formelemente als vergleichsweise schmale Elemente ausgeführt sein, die zwar die mechanische Festigkeit gegenüber einem Ausknicken aufweisen, aber lediglich einen vergleichsweise geringen Teil der eigentlichen Oberfläche des Brennstoffzellenstapels bedecken. Die Zusammenfügung zum Stabilisierungsmantel als solchen kann dann über die Verbindungselemente erfolgen, die je nach Auslegung im Vergleich zu den eigentlichen Formelementen lediglich deutlich geringere Materialanforderungen erfüllen müssen.

Die Verbindungselemente sind dabei als Spannverstrebungen oder Spanngurte ausgebildet. Bei einer derartigen Ausgestal tung sind die Verbindungselemente im montierten Zustand im wesentlichen auf Zug belastet, so daß besonders angepaßte Materialien zu Einsatz kommen können.

Bei der Zusammenschaltung von Brennstoffzellen zu einem Brennstoffzellenstapel können insbesondere an den Randbereichen der Brennstoffzellen spannungsführende Bauteile oder Elektroden zugänglich sein. Um dennoch auch beim Einsatz in der Umgebung von exponierten oder geerdeten Teilen die Gefahr von Kurzschlüssen und einem dadurch bedingten Ausfall des Brennstoffzellenmoduls sicher auszuschließen, ist vorteilhafterweise jedes Formelement an seiner dem Brennstoffzellenstapel zugewandten Seite mit einer Anzahl von Isolationselementen versehen. Somit kann je nach Ausgestaltung des Stabilisierungsmantels dieser auch als Isolationsumhüllung für den Brennstoffzellenstapel ausgebildet sein. In jedem Fall ist durch die Isolationselemente aber sichergestellt, daß die Elemente des Stäbilisierungsmantels selbst potentialfrei gehalten sind und somit nicht zur Gefahr der Bildung von Kurzschlüssen beitragen.

Vorteilhafterweise sind die in Längsrichtung des Brennstoffzellenstapels gesehen außenliegenden Brennstoffzellen, also die in Stapelrichtung gesehen erste und letzte Brennstoffzelle, jeweils mit einer auch als Polplatte bezeichneten Anschlußplatte verbunden. Die Anschlußplatten sind dabei vorzugsweise metallisch ausgebildet und dienen zur Zu- und Abführung der Betriebsmedien und des Betriebsstroms in die bzw. von der Brennstoffzelle. Die Anschlußplatten sind dabei flächig ausgebildet, um eine entsprechende gleichmäßige Einleitung bzw. Ableitung des Betriebsstroms in den bzw. aus dem aktiven Bereich der ersten bzw. letzten Brennstoffzelle zu gewährleisten.

Um in der Art einer besonders kompakten Anordnung eine mechanisch besonders stabile Ausgestaltung des Brennstoffzellenmoduls zu ermöglichen, ist dabei vorteilhafterweise an jeder Anschlußplatte jeweils eine Anzahl von Zugankern angeordnet. Über diese Zuganker sind die Anschlußplatten in weiterer vorteilhafter Ausgestaltung in Längsrichtung des Brennstoffzellenstapels mittels an ihnen angreifender Spannmittel miteinander verspannt. Damit ist neben einer mechanisch stabilen und somit auch leicht transportablen Einheit auch auf besonders einfache Weise die Aufrechterhaltung eines erwünschten axialen Drucks auf jede einzelne Brennstoffzelle, insbesondere zur Aufrechterhaltung der erforderlichen Dichtigkeit der Dichtungen in der genannten Art und Weise, ermöglicht.

Die mit der Erfindung erzielten Vorteile bestehen insbesondere darin, daß durch die Ummantelung zumindest eines mittleren Bereichs des Brennstoffzellenstapels mit einem Stabilisierungsmantel auch bei der Verwendung in mechanischer Hinsicht eigentlich ungünstigen Komponenten wie beispielsweise den Dichtungselementen im Brennstoffzellenstapel eine besonders hohe Stabilität gegenüber einem seitlichen Ausknicken gewährleistet ist. Somit ist ohne Beeinträchtigung der Betriebssicherheit des Brennstoffzellenmoduls eine Beaufschlagung des Brennstoffzellenstapels mit axialem Druck zur Sicherstellung einer erforderlichen Dichtigkeit in den Medienräumen zwischen den einzelnen Brennstoffzellen ermöglicht. Durch die Verspannung des Brennstoffzellenmoduls in axialer Richtung, insbesondere durch die Verwendung der Spannmittel in Kombination mit den an den Polplatten angeordneten Zugankern, ist zudem ein besonders kompaktes und vergleichsweise leicht transportierbares Brennstoffzellenmodul bereitstellbar.

Ein Ausführungsbeispiel der Erfindung wird anhand einer Zeichnung näher erläutert. Darin zeigen:
- Figur 1: ein Brennstoffzellenmodul in seitlicher Ansicht, und
- Figur 2: das Brennstoffzellenmodul gemäß Figur 1 im Quer- schnitt.

Gleiche Teile sind in beiden Figuren mit den selben Bezugszeichen versehen.

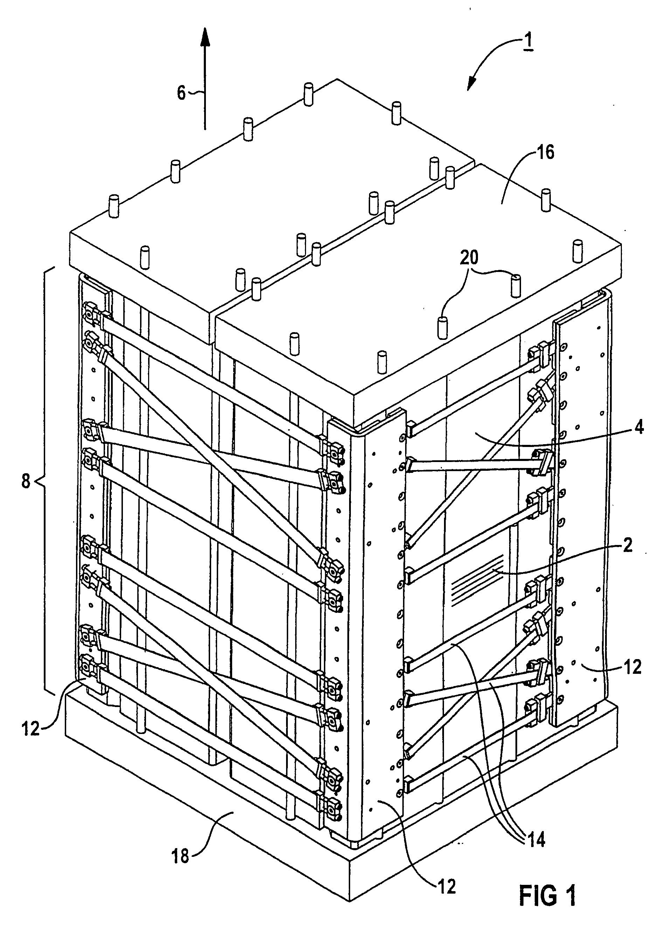

Das Brennstoffzellenmodul 1 gemäß Figur 1 umfaßt eine Anzahl von in der Figur lediglich angedeuteten Brennstoffzellen 2, die elektrisch hintereinandergeschaltet sind. Jede Brennstoffzelle 2 umfaßt dabei in nicht näher dargestellter Weise einen flächig ausgebildeten Elektrolyten, der beidseitig jeweils von einer Elektrode großflächig bedeckt ist. Die Elektrode ist dabei jeweils von einer Anzahl von Kanälen durchzogen, über die ein Medium, insbesondere je nach Polung der jeweiligen Elektrode ein Wasserstoff aufweisender Brennstoff oder ein Sauerstoff aufweisender Hilfsstoff, mit dem Elektrolyten in Kontakt bringbar ist. Zur elektrischen Hintereinanderschaltung sind die Brennstoffzellen 2 dabei paarweise über ihre Elektroden miteinander verbunden, wobei sich insgesamt in der Art eines geschichteten Aufbaus ein Brennstoffzellenstapel 4 bildet.

Für eine ausreichende Betriebssicherheit beim Betrieb der Brennstoffzellen 2 und insbesondere zur Herstellung einer für die Betriebssicherheit ausreichenden Dichtigkeit der jeweils zwischen zwei benachbarten Brennstoffzellen 2 angeordneten Dichtungen ist vorgesehen, den Brennstoffzellenstapel 4 unter einem gewissen axialen Druck in seiner durch den Pfeil 6 symbolisierten Längsrichtung zu betreiben. Die Aufbringung eines derartigen axialen Drucks in Längsrichtung des Brennstoffzellenstapels 4 bewirkt jedoch, insbesondere aufgrund der für die Dichtung zwischen jeweils zwei Brennstoffzellen 2 vorgesehenen elastischen Materialien, eine Neigung des Brennstoffzellenstapels 4 zum Ausknicken. Unter Ausknicken ist dabei insbesondere die Verschiebung einer oder mehrerer Brennstoffzellen 2 aus dem Mittenbereich des Brennstoffzellenstapels 4 in einer Richtung senkrecht zur durch den Pfeil 6 repräsentierten Längsrichtung zu verstehen.

Die Neigung des Brennstoffzellenstapels 4 zum Ausknicken nimmt dabei unter anderem auch mit zunehmender Anzahl der hintereinandergeschalteten Brennstoffzellen 2 zu. An sich ist somit die Anzahl der zu dem Brennstoffzellenstapel 4 hintereinanderschaltbaren Brennstoffzellen 2 durch die Vorgabe einer für eine ausreichende Betriebssicherheit noch als tolerierbar angesehenen Neigung zum Ausknicken des Brennstoffzellenstapels 4 begrenzt.

Um diese unerwünschte Einschränkung bei der Flexibilität des Brennstoffzellenmoduls 1 zu umgehen und unabhängig von den bei der Auslegung der Brennstoffzellen 2 verwendeten Materialien die Hintereinanderschaltung einer beliebigen Anzahl von Brennstoffzellen 2, insbesondere angepaßt an die jeweilige Auslegungslast, zu ermöglichen, ist das Brennstoffzellenmodul 1 für eine besonders hohe Stabilität gegenüber der genannten Gefahr des lateralen Ausknickens ausgelegt. Dazu ist der Brennstoffzellenstapel 4 in seiner durch den Pfeil 6 repräsentierten Längsrichtung gesehen über einen vergleichsweise großen Längsbereich 8 hinweg von einem Stabilisierungsmantel 10 umfaßt. Der Stabilisierungsmantel 10 umfaßt dabei eine Anzahl von formschlüßig an die Außenkontur des Brennstoffzellenstapels 4 angepaßten Formelementen 12.

Im Ausführungsbeispiel sind die Formelemente 12 jeweils als an einer Außenkante des Brennstoffzellenstapels 4 anlegbare Winkelstangen ausgebildet. Alternativ können auch Formelemente vorgesehen sein, die als in Längsrichtung des Brennstoffzellenstapels 4 ausgedehnte, diesen im Querschnitt an einer seiner Außenseiten umgreifende U-Bleche ausgebildet sind.

Jedes Formelement 12 ist mit dem ihm jeweils benachbarten Formelementen 12 über eine Anzahl von Verbindungselementen 14 verbunden, die im Ausführungsbeispiel als Spannverstrebungen ausgebildet sind. Einige der Verbindungselemente 14 sind dabei als einander paarweise überkreuzende diagonal angeordnete Verbindungselemente 14 ausgebildet. Andere Verbindungselemente 14 sind hingegen als einfach laufende, im wesentlichen Senkrecht zur durch den Pfeil 6 angedeuteten Längsrichtung des Brennstoffzellenstapels 4 ausgerichtete Querverstrebungen ausgebildet.

Die in Längsrichtung des Brennstoffzellenstapels 4 gesehen außen liegenden Brennstoffzellen 2 sind jeweils mit einer Anschlußplatte 16, 18 verbunden. Über die Anschlußplatten 16, 18 sind den zum Brennstoffzellenstapel 4 zusammengeschalteten Brennstoffzellen 2 die Betriebsmedien zuführbar.

An den auch als Polplatten bezeichneten Anschlußplatten 16, 18 ist jeweils eine Anzahl von Zugankern 20 angeformt. Über die Zuganker 20 und daran befestigte, nicht näher dargestellte Spanngurte oder Spannmittel sind die Anschlußplatten 16, 18 in Längsrichtung des Brennstoffzellenstapels 4 gesehen miteinander verspannt. Durch diese Spannung wird in axialer Richtung oder Längsrichtung des Brennstoffzellenstapels 4 ein Druck auf die Brennstoffzellen 2 und die zwischen diese geschalteten Dichtungselemente ausgeübt. Durch diese Anordnung ist das Brennstoffzellenmodul 1 somit besonders kompakt ausgeführt und als Einheit transportierbar.

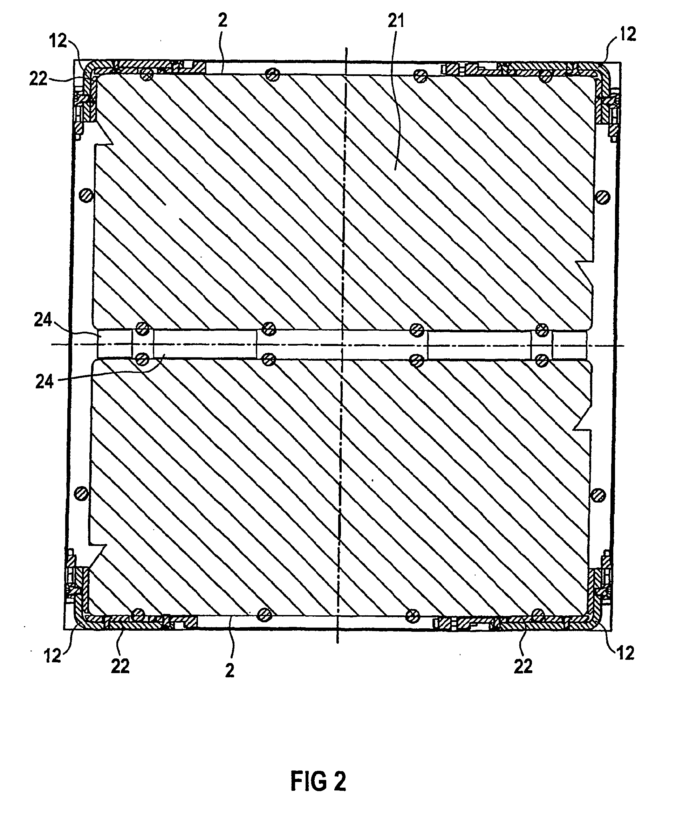

In Figur 2 ist das Brennstoffzellenmodul 1 im Querschnitt gezeigt. Dabei sind zwei nebeneinanderliegende Brennstoffzellen von den den Brennstoffzellenstapel 4 bildenden Brennstoffzellen 2 in Aufsicht gezeigt. Jede der Brennstoffzellen 2 weist dabei eine flächig ausgebildete Elektrode 21 auf, die mit einer entsprechenden Elektrode einer in Stapelrichtung benachbarten Brennstoffzelle 2 in Kontakt bringbar ist, so daß eine Hintereinanderschaltung der Brennstoffzellen 2 entsteht. Wie im Querschnitt gemäß Figur 2 erkennbar ist, ist die Brennstoffzelle 2 und somit der durch sie gebildete Brennstoffzellenstapel 4 in den Kantenbereichen von den Formelementen 12 umgeben. Zwischen den Formelementen 12 und der Brennstoffzelle 2 ist dabei jeweils eine Anzahl von Isolationselementen 22 angeordnet. Die Isolationselemente 22 stellen dabei sicher, daß die eigentlich potentialführenden Brennstoffzellen 2 in elektrischer Hinsicht vollständig von den Formelementen 12 entkoppelt sind. Die Formelemente 12 können somit geerdet sein, so daß das Brennstoffzellenmodul 1 eine besonders hohe Betriebssicherheit aufweist. Zwischen den beiden Brennstoffzellenstapeln 4 sind elektrisch isolierende Abstandshalter 24 angeordnet, die die beiden Stapel in einem vorgegebenen Abstand voneinander halten. Die Abstandhalter 24 sind als Stangen mit rechteckigem Querschnitt ausgebildet, die entlang des gesamten Brennstoffzellenstapels 4 angeordnet sind. Ebenso gut können die Abstandhalter auch als kleinere, nur jeweils zwei oder eine kleine Anzahl von Brennstoffzellen 2 beabstandende Quader geformt sein. Sehr stabil und einfach in der Herstellung und Montage sind die Abstandhalter 24, wenn sie aus einem Teil der Dichtung einer Brennstoffzelle 2 ausgebildet sind. Die Abstandshalter sind dann integraler Bestandteil der Dichtung und somit der Brennstoffzelle 2.

## Patentansprüche

1. Brennstoffzellenmodul (1), bei dem eine Anzahl von hintereinandergeschalteten Brennstoffzellen (2) einen Brennstoffzellenstapel (4) bilden, der in seiner Längsrichtung gesehen von einem Stabilisierungsmantel (10) umfaßt ist, wobei der Stabilisierungsmantel (10) eine Anzahl von formschlüssig an die Außenkontur des Brennstoffzellenstapels (4) angepaßten Formelementen (12) aufweist, wobei eine Anzahl der Formelemente (12) als an einer Außenkante des Brennstoffzellenstapels (4) anlegbare Winkelstange ausgebildet ist,
**dadurch gekennzeichnet, dass** jedes Formelement (12) mit den ihm benachbarten Formelementen (12) über eine Anzahl von Verbindungselementen (14) verbunden ist, wobei die Verbindungselemente (14) als Spannverstrebungen oder Spanngurte ausgebildet sind.

2. Brennstoffzellenmodul, bei dem eine Anzahl von hintereinandergeschalteten Brennstoffzellen einen Brennstoffzellenstapel bilden, der in seiner Längsrichtung gesehen von einem Stabilisierungsmantel umfaßt ist, wobei der Stabilisierungsmantel eine Anzahl von formschlüssig an die Außenkontur des Brennstoffzellenstapels angepaßten Formelementen aufweist,
**dadurch gekennzeichnet, dass** eine Anzahl der Formelemente als in Längsrichtung des Brennstoffzellenstapels ausgedehntes, diesen im Querschnitt an einer seiner Außenseiten umgreifendes U-Blech ausgebildet ist, wobei jedes Formelement mit den ihm benachbarten Formelementen über eine Anzahl von Verbindungselementen verbunden ist, wobei die Verbindungselemente als Spannverstrebungen oder Spanngurte ausgebildet sind.

3. Brennstoffzellenmodul (1) nach einem der Ansprüche 1 bis 2, bei dem jedes Formelement (12) an seiner dem Brennstoffzellenstapel (4) zugewandten Seite mit einer Anzahl von Isolationselementen (22) versehen ist.

4. Brennstoffzellenmodul (1) nach einem der Ansprüche 1 bis 3, bei dem die in Längsrichtung des Brennstoffzellenstapels (4) gesehen außenliegenden Brennstoffzellen (2) jeweils mit einer Anschlußplatte (16, 18) verbunden sind.

5. Brennstoffzellenmodul (1) nach Anspruch 4, bei dem an jeder Anschlußplatte (16, 18) jeweils eine Anzahl von Zugankern (20) angeordnet ist.

6. Brennstoffzellenmodul (1) nach Anspruch 5, bei dem die Anschlußplatten (16, 18) in Längsrichtung des Brennstoffzellenstapels (4) mittels an den Zugankern (20) angreifender Spannmittel miteinander verspannt sind.

7. Brennstoffzellenmodul (1) nach einem der Ansprüche 1 bis 6 mit mindestens zwei zueinander senkrecht zur Stapelrichtung versetzt nebeneinander angeordneten Brennstoffzellenstapeln (4) innerhalb des Stabilisierungsmantels (10).

8. Brennstoffzellenmodul (1) nach Anspruch 7 mit einem zwischen den beiden Stapeln angeordneten elektrisch isolierenden Abstandshalter (24).

9. Brennstoffzellenmodul (1) nach Anspruch 8, bei dem eine Dichtung einer der Brennstoffzellen (2) als Abstandshalter (24) dient.

## Claims

1. Fuel cell module (1), in which a number of fuel cells (2) connected in series form a fuel cell stack (4), which is surrounded, as seen in its longitudinal direction, by a stabilizing casing (10), the stabilizing casing (10) having a number of molded elements (12) which are matched in a positively locking manner to the outer contour of the fuel cell stack (4), a number of the molded elements (12) being designed as angle bars which can be placed against an outer edge of the fuel cell stack (4), **characterized in that** each molded element (12) is connected to the molded elements (12) which adjoin it by means of a number of connecting elements (14), the connecting elements (14) being designed as tensioning struts or tensioning straps.

2. Fuel cell module, in which a number of fuel cells connected in series form a fuel cell stack, which is surrounded, as seen in its longitudinal direction, by a stabilizing casing, the stabilizing casing having a number of molded elements which are matched in a positively locking manner to the outer contour of the fuel cell stack, **characterized in that** a number of the molded elements are designed as a U-shaped metal sheet which is extended in the longitudinal direction of the fuel cell stack and engages around the latter in cross section on one of its outer sides, each molded element being connected to the molded elements which adjoin it by means of a number of connecting elements, the connecting elements being designed as tensioning struts or tensioning straps.

3. Fuel cell module (1) according to one of Claims 1 to 2, in which each molded element (12) is provided with a number of insulating elements (22) on its side which faces the fuel cell stack (4).

4. Fuel cell module (1) according to one of Claims 1 to 3, in which the fuel cells (2) which lie on the outer sides, as seen in the longitudinal direction of the fuel cell stack (4), are each connected to a connection plate (16, 18).

5. Fuel cell module (1) according to Claim 4, in which a number of tie rods (20) are arranged on each connection plate (16, 18).

6. Fuel cell module (1) according to Claim 5, in which the connection plates (16, 18) are clamped together in the longitudinal direction of the fuel cell stack (4), by means of tensioning means which engage on the tie rods (20).

7. Fuel cell module (1) according to one of Claims 1 to 6, having at least two fuel cell stacks (4) which are arranged adjacent to but offset from one another perpendicular to the stack direction, inside the stabilizing casing (10).

8. Fuel cell module (1) according to Claim 7, having an electrically insulating spacer (24) arranged between the two stacks.

9. Fuel cell module (1) according to Claim 8, in which a seal of one of the fuel cells (2) is used as the spacer (24).

## Revendications

1. Module ( 1 ) de piles à combustible, dans lequel un certain nombre de piles ( 2 ) à combustible montées en série forment un empilement ( 4 ) de piles à combustible, qui, considéré dans sa direction longitudinale, est entouré d'une enveloppe ( 10 ) de stabilisation, l'enveloppe ( 10 ) de stabilisation ayant un certain nombre d'éléments ( 12 ) de forme adaptés à complémentarité de forme au contour extérieur de l'empilement ( 4 ) de piles à combustible, un certain nombre des éléments ( 12 ) de forme étant constitués sous la forme de barre coudée pouvant s'appliquer à un bord extérieur de l'empilement ( 4 ) de piles à combustible,
**caractérisé en ce que** chaque élément ( 12 ) de forme est assemblé aux éléments ( 12 ) de forme qui en sont voisins, par un certain nombre d'éléments ( 14 ) d'assemblage, les éléments ( 14 ) d'assemblage étant constitués sous la forme d'entretoises de serrage ou de sangles de serrage.

2. Module de piles à combustible, dans lequel un certain nombre de piles à combustible montés en série forme un empilement de piles à combustible qui est entouré, considéré dans sa direction longitudinale, d'une enveloppe de stabilisation, l'enveloppe de stabilisation ayant un certain nombre d'éléments de forme adaptés à complémentarité de forme au contour extérieur de l'empilement de piles à combustible, **caractérisé en ce qu'**un certain nombre des éléments de forme est constitué sous la forme d'une tôle en U, s'étendant dans la direction longitudinale de l'empilement de piles à combustible et l'entourant en coupe transversale sur l'un de ses côtés extérieurs, chaque élément de forme est assemblé aux éléments ( 12 ) de forme qui en sont voisins, par un certain nombre d'éléments d'assemblage, les éléments d'assemblage étant constitués sous la forme d'entretoise de serrage ou de sangle de serrage.

3. Module ( 1 ) de piles à combustible suivant l'une des revendications 1 à 2, dans lequel chaque élément ( 12 ) de forme est pourvu sur son côté tourné vers l'empilement ( 4 ) de piles à combustible d'un certain nombre d'éléments ( 22 ) isolants.

4. Module ( 1 ) de piles à combustible suivant l'une des revendications 1 à 3, dans lequel les piles ( 2 ) à combustible, à l'extérieur considéré dans la direction longitudinale de l'empilement ( 4 ) de piles à combustible, sont reliées respectivement à une plaque ( 16, 18 ) de connexion.

5. Module ( 1 ) de piles à combustible suivant la revendication 4, dans lequel un certain nombre de tirants ( 20 ) est disposé respectivement sur chaque plaque ( 16, 18 ) de connexion.

6. Module ( 1 ) de piles à combustible suivant la revendication 5, dans lequel les plaques ( 16, 18 ) de connexion sont serrées entre elles dans la direction longitudinale de l'empilement ( 4 ) de piles à combustible, à l'aide d'un moyen de serrage attaquant les tirants ( 20 ).

7. Module ( 1 ) de piles à combustible suivant l'une des revendications 1 à 6, comprenant à l'intérieur de l'enveloppe ( 10 ) de stabilisation, au moins deux empilements ( 4 ) de piles à combustible disposés côte à côte de manière décalée, l'un par rapport à l'autre, perpendiculairement à la direction d'empilement.

8. Module ( 1 ) de piles à combustible suivant la revendication 7, comprenant une entretoise ( 24 ) isolante du point de vue électrique disposée entre les deux empilements.

9. Module ( 1 ) de piles à combustible suivant la revendication 8, dans lequel une étanchéité de l'une des piles ( 2 ) à combustible sert d'entretoise ( 24 ).
